# EUROPÄISCHE PATENTANMELDUNG

(11) **EP 1 760 508 A1**
(43) Veröffentlichungstag der Anmeldung: **07.03.2007**
(21) Anmeldenummer: 05019184.0
(22) Anmeldetag: 03.09.2005
(51) Int. Cl.: G02B 6/50, H02G 15/013

(54) **Dichtungsvorrichtung**

(71) Anmelder: LIC Langmatz GmbH, 82467 Garmisch-Partenkirchen (DE)
(72) Erfinder:
(74) Vertreter: Flosdorff, Jürgen

(57) **Zusammenfassung**

Die Dichtungsvorrichtung für ein Rohr größeren Durchmessers, aus dem mehrere Rohre kleineren Durchmessers austreten können, ist durch eine Dichtungstülle gekennzeichnet, die einen Basiskörper größeren Durchmessers mit einem offenen Ende und mit einer Lochwand versehenen anderen Ende enthält, wobei von den Rändern der Lochwand röhrchenförmige Ansätze kleineren Durchmessers mit in einem Ausgangszustand geschlossener vorderer Stirnwand vorstehen, und wobei die Dichtungstülle aus einem gummielastischen Material besteht.

## Beschreibung

Die Erfindung betrifft allgemein eine Dichtungsvorrichtung zwischen einem Rohr größeren Durchmessers und mehreren Rohren kleineren Durchmessers, die aus dem offenen Ende des Rohres größeren Durchmessers austreten.

Spezieller betrifft die Erfindung eine Dichtungsvorrichtung, mit der der Zwischenraum zwischen einem in der Erde zu verlegenden Leerrohr, das vorzugsweise einen Durchmesser zwischen 50 mm und 160 mm hat, und mehreren dadurch hindurchgeführten Leerrohren mit einem Durchmesser von vorzugsweise 5 mm bis 15 mm, durch die Glasfaserkabel hindurchgeführt werden, abgedichtet wird, so daß z.B. vagabundierende Gase in dem Leerrohr größeren Durchmessers und/oder Feuchtigkeit nicht aus dem Leerrohr größeren Durchmessers austreten oder an der abgedichteten Seite in dieses eintreten können.

Glasfaserkabel werden durch Erdrohre an die Gebäude, in denen sie benötigt werden, herangeführt. Auf dem Weg dahin münden die im Erdreich verlegten Leerrohre, durch die die Glasfaserkabel in zugehörigen dünnen Leerrohren verlaufen, im allgemeinen in Schächte ein, in denen sich die Glasfaserkabel verzweigen können, wobei einige Glasfaserstränge in ihren zugehörigen Leerrohren durch Erdrohre an ein Gebäude herangeführt werden können, während die anderen Glasfaserkabel zu einem weiteren Schacht beispielsweise entlang eines Straßenzuges verlaufen können.

In einem solchen Schacht treten somit mehrere Rohre kleineren Durchmessers, die zur Aufnahme der Glasfaserkabel vorgesehen sind, aus einem dickeren Erd-Leerrohr aus und an einer oder mehreren anderen Stellen des Schachtes wieder in ein solches Erd-Leerrohr ein. Dabei kann die Anzahl der Glasfaserkabel-Leerrohre im großen Umfang variieren, da durch ein Erdleerrohr beispielsweise vierundzwanzig Glasfaserkabel-Leerrohre verlaufen können. Darüber hinaus kann der Durchmesser der Glasfaserkabel-Leerrohre in einem größeren Bereich schwanken. Hierbei können Glasfaserkabel-Leerrohre unterschiedlichen Durchmessers in einem gemeinsamen Erd-Leerrohr verlegt sein.

Der vorliegenden Erfindung liegt die Aufgabe zugrunde, eine Dichtungsvorrichtung der eingangs genannten Art anzugeben, mit der zuverlässig verhindert ist, daß Gase, Feuchtigkeit etc. aus dem Rohr größeren Durchmessers austreten oder in dieses eintreten kann. Dabei sollen durch das Rohr größeren Durchmessers Rohre kleineren Durchmessers hindurchgeführt werden, deren Anzahl variieren und nachträglich erhöht werden kann.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß als Dichtungsvorrichtung eine Dichtungstülle verwendet wird, die aus einem gummielastischen Material wie Silikon besteht, und einen Basiskörper größeren Durchmessers mit einem offenen Ende hat, wobei dieser Basiskörper unter Aufweitung außen auf das Rohr größeren Durchmessers aufgesetzt oder aufgeschoben wird, wonach sich der Basiskörper mit dem axialen Teil, der auf dem Rohr sitzt, fest an dieses anlegt. Das andere Ende des Basiskörpers ist mit einer gelochten Wand versehen, wobei von den Rändern der Löcher dieser Lochwand röhrchenförmige oder fingerförmige Ansätze kleineren Durchmessers nach außen, d.h. weg von dem Basiskörper, vorstehen. Diese röhrchenförmigen Ansätze sind an ihren Enden verschlossen, vorzugsweise durch eine vordere Stirnwand, wobei sie aber auch beispielsweise spitz zulaufen können.

Im Ausgangszustand der Dichtungstülle verschließt diese somit das Ende des Rohres größeren Durchmessers, auf das die Dichtungstülle aufgesetzt ist, luftdicht, so daß dann, wenn in einem Ausgangszustand noch keine Rohre kleineren Durchmessers aus diesem größeren Rohr austreten, Gas, Feuchtigkeit etc. weder in das Rohr eintreten noch aus diesem austreten können.

Wenn durch dieses im folgenden als Erd-Leerrohr bezeichnete Rohr größeren Durchmessers nun als Glasfaserkabel-Leerrohre bezeichnete Rohre kleineren Durchmessers hindurchgeführt werden, die aus dem offenen Ende des Erd-Leerrohre, z.B. in einem Schacht austreten, um beispielsweise durch Spleißen der Kabel in zwei oder mehr anschließende Erd-Leerrohre wieder eingeführt zu werden, werden diese Glasfaserkabel-Leerrohre jeweils durch einen röhrchenförmigen Ansatz der Dichtungstülle hindurchgeführt, nachdem dessen vordere Stirnwand bzw. Endabschnitt abgetrennt bzw. abgeschnitten wurde. Die röhrchenförmigen Ansätze haben im spannungslosen Zustand einen kleineren Durchmesser als die hindurchzuführenden Rohre, so daß sie aufgeweitet werden und sich infolge ihrer gummielastischen Eigenschaft fest an die Außenseite der Glasfaserkabel-Leerrohre anlegen. Auch in diesem Zustand wird somit erfindungsgemäß eine gasdichte Abdichtung erreicht.

Das Hindurchführen der Glasfaserkabel-Leerrohre durch die hierzu ausgewählten röhrchenförmigen Ansätze kann nach einem weiteren Gesichtspunkt der Erfindung dadurch erleichtert werden, daß zunächst kurze Rohrstücke in die röhrchenförmigen Ansätze eingesetzt werden, die einen Innendurchmesser haben, der etwas größer als der Außendurchmesser des zugehörigen Glasfaserkabel-Leerrohres ist. Wenn diese Montageröhrchen, die die röhrchenförmigen Ansätze an beiden Seiten überragen, aus einem harten, glatten Kunststoff bestehen, lassen sich die Glasfaserkabel-Leerrohre glatt hindurchführen, womit eine Beschädigung der Dichtungstülle zuverlässig vermieden ist. Die Montageröhrchen werden danach wieder aus den röhrchenförmigen Ansätzen herausgezogen, so daß sich diese fest an die Außenseiten der Glasfaserkabel-Leerrohre anlegen.

Mit der erfindungsgemäßen Dichtungstülle wird somit an einer außerhalb des Außenrohres liegenden Stelle eine Abdichtung zwischen der Innenwand des Außenrohres und den Außenwänden der hindurchgeführten Innenrohre hervorgerufen. Der Herstellungs- und Montageaufwand dieser Abdichtung sind gering, zumal dann, wenn die Dichtungstülle im Spritzgußverfahren hergestellt wird.

Der Basiskörper kann über seine gesamte Länge eine kreiszylindrische Form gleichen Durchmessers haben. Alternativ kann vorgesehen sein, daß der offene Endabschnitt des Basiskörpers, der auf das Erd-Leerrohr aufgesetzt wird, einen kleineren Durchmesser hat als der anschließende axiale Teil des Basiskörpers, wobei der Übergang konisch ausgebildet sein kann. Durch die Aufweitung des Teils der Dichtungstülle, an dem die röhrchenförmigen Ansätze vorgesehen sind, steht vor allem dann, wenn eine große Anzahl von Glasfaserkabel-Leerrohren hindurchgeführt werden, mehr Platz in radialer Richtung zur Verfügung, um die einzelnen Glasfaserkabel-Leerrohre durch die röhrchenförmigen Ansätze führen zu können.

Mit Vorteil wird vorgeschlagen, daß am offenen Ende des Basiskörpers ein umgebördelter Stülprand angeformt sein kann, der einen größeren Durchmesser als der Basiskörper hat. Dieser Stülprand, der mit einem kleinen radialen Zwischenraum entlang des Basisabschnitts zurückführt und sich beispielsweise über 20 bis 30% der Länge des Basiskörpers erstrecken kann, erleichtert erheblich das Aufziehen der Dichtungstülle auf das Rohr, indem der Stülprand an zwei gegenüberliegenden Seiten untergriffen und aufgeweitet wird.

Die röhrchenförmigen Ansätze erstrecken sich im wesentlichen in axialer Richtung der Dichtungstülle, ohne daß die Erfindung hierauf beschränkt ist. Sie können in mehreren, beispielsweise zwei oder drei konzentrischen Kreisen von der Stirnseite der Dichtungstülle vorstehen und beispielsweise eine kreiszylindrische Form haben oder sich stufenförmig oder allmählich zu ihrem freien Ende hin verjüngen.

Die erfindungsgemäße Dichtungsvorrichtung ist in axialer Richtung beweglich, so daß keine Probleme auftreten, wenn Zugkräfte auf die Innenrohre ausgeübt werden.

Die Dichtungsvorrichtung ist entsprechend verwendbar, wenn statt Innenrohre Kabel durch das Außenrohr verlaufen.

Nach einem weiteren Vorschlag der Erfindung können die Enden derjenigen Glasfaserkabel-Leerrohre, die durch die Dichtungstülle hindurchgeführt, aber noch nicht mit Glasfaserkabeln bestückt sind, durch Stopfen aus einem gummielastischen Material verschlossen werden. Hierbei ist erfindungsgemäß vorgesehen, daß jeder Stopfen einen längsgeschlitzten hohlen Schaft und einen anschließenden geschlossenen Kopfabschnitt größeren Durchmessers hat. Die Bohrung des Schaftes erstreckt sich teilweise bis in den Bereich des Kopfabschnitts hinein, der eine umlaufende Nut hat, die anzeigt, wo der Kopfabschnitt so abgetrennt werden kann, daß die Bohrung durch den dann verbleibenden Stopfen hindurch verläuft.

Vor dem Hindurchführen der Glasfaserkabel durch das Leerrohr wird der Stopfen in dessen Ende eingesetzt, so daß der Kopfabschnitt außen an dem Leerrohr anliegt. Nach dem Hindurchführen der Glasfaserkabel dient der Stopfen dazu, den Zwischenraum zwischen den Glasfaserkabeln und der Innenwand des Leerrohres abzudichten, indem der Kopfabschnitt an der Ringnut abgeschnitten wird. Da der verbleibende Stopfen über die gesamte verbleibende Länge geschlitzt ist, kann er um die Glasfaserkabel herumgelegt und in das offene Ende des Leerrohres hineingepreßt werden, womit das Innere des Leerrohres zuverlässig abgedichtet ist.

Weitere Einzelheiten der Erfindung ergeben sich aus der nachfolgenden Beschreibung bevorzugter Ausführungsformen sowie anhand der Zeichnungen. Dabei zeigen:
- Figuren 1 bis 3: eine erste Ausführungsform der Dichtungstülle in verschiedenen perspektivischen Ansichten und unterschiedlichen Maßstäben,
- Figur 4: einen Längsschnitt durch die Dichtungstülle der Figuren 1 bis 3 im abdichtenden Zustand;
- Figur 5: eine zweite Ausführungsform der Dichtungstülle und
- Figur 6: ein Stopfen zum Abdichten eines Glasfaserkabel-Leerrohres.

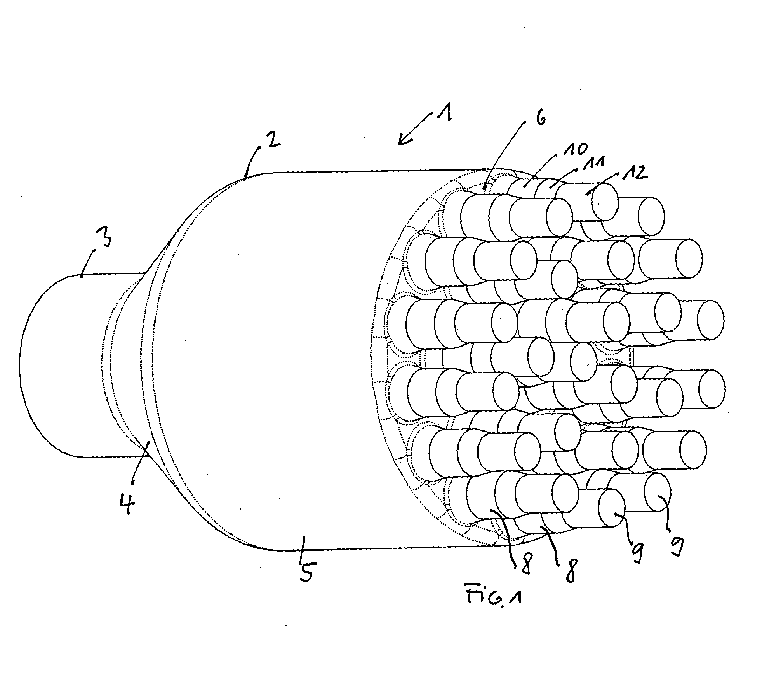

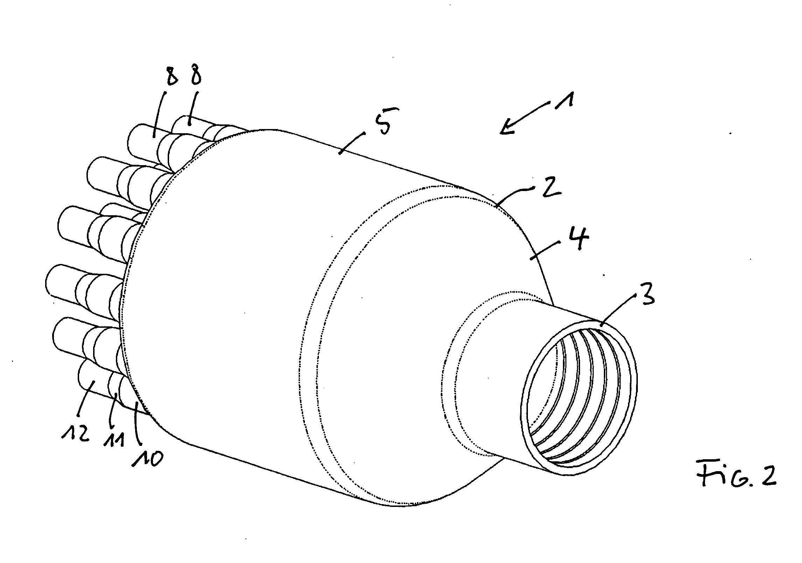

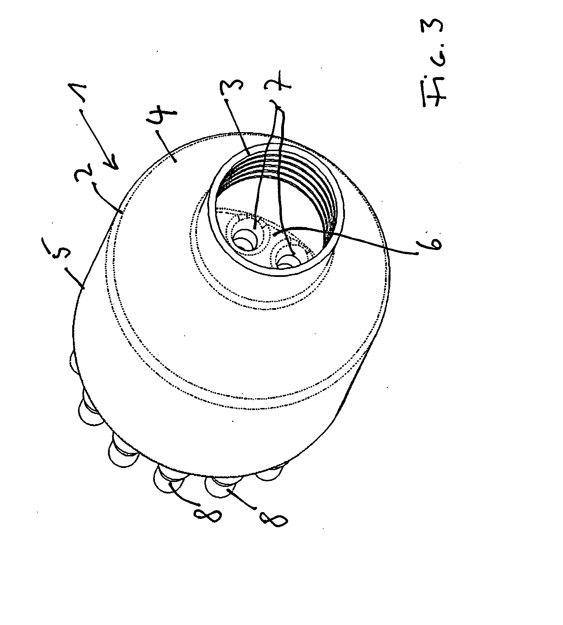

Die Figuren 1 bis 3 zeigen eine Dichtungstülle 1, deren Basiskörper 2 einen kreiszylindrischen Endabschnitt 3 aufweist, der im Anschluß an einen kegelstumpfförmigen Übergangsbereich 4 in einen kreiszylindrischen Abschnitt 5 größeren Durchmessers übergeht.

Am Ende des Abschnitts 5 ist eine Lochwand 6 angeformt, die bei dieser Ausführungsform 24 kreisrunde Löcher 7 enthält. Vom Rand der Löcher erstrecken sich in axialer Richtung der Dichtungstülle 1 auf konzentrischen Kreisen angeordnete röhrchenförmige Ansätze 8, deren Enden in einem Ausgangszustand der Dichtungstülle 1 durch Stirnwände 9 verschlossen sind.

Jeder röhrchenförmige Ansatz 8 besteht aus einem kreiszylindrischen Abschnitt 10, der nach einem kegelstumpfförmigen Übergangsbereich 11 in einen endseitigen Abschnitt 12 kleineren Durchmessers übergeht.

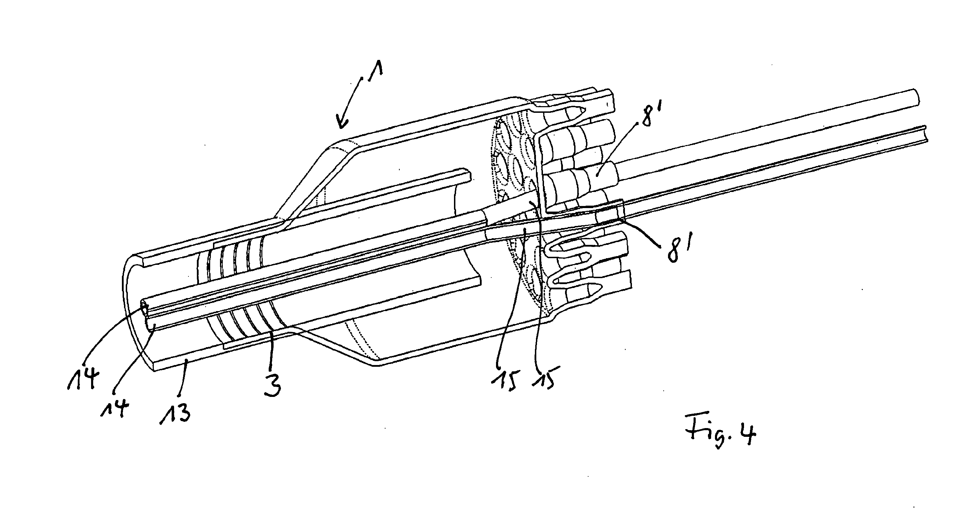

Figur 4 zeigt den Zustand, in dem die Dichtungstülle 1 mit ihrem Endabschnitt 3 außen auf ein Erd-Leerrohr 13 aufgesetzt ist. Hierzu wurde zuvor der Endabschnitt 3 aufgeweitet und in die Befestigungslage gebracht, in der sich der Endabschnitt 3 fest an die Außenseite des Erd-Leerrohres 13 anlegt.

Durch das Erd-Leerrohr 13 werden zwei Glasfaserkabel-Leerrohre 14 geführt, die aus dem Erd-Leerrohr 13 austreten. Die in den Glasfaserkabel-Leerrohren geführten Glasfaserkabel können beispielsweise in einem nicht dargestellten Schacht austreten und wiederum in ein Glasfaserkabel-Leerrohr, welches von einer weiteren Dichtungstülle umschlossen wird, in ein anderes Erd-Leerrohr eintreten.

Die Glasfaserkabel-Leerrohre 14 verlaufen durch zwei ausgewählte röhrchenförmige Ansätze 8', deren Stirnwände 9 zuvor abgeschnitten wurden. Figur 4 deutet an, daß zum Durchführen der Glasfaserkabel-Leerrohre 14 durch die röhrchenförmigen Ansätze 8' zuvor Montageröhrchen 15 durch diese hindurchgeführt werden können, die die röhrchenförmigen Ansätze 8' radial aufweiten und - obwohl dies die Figur nicht deutlich zeigt - einen Innendurchmesser haben, der etwas größer als der Außendurchmesser der Glasfaserkabel-Leerrohre 14 ist. Nach dem Durchführen der Glasfaserkabel-Leerrohre 14 werden die Montageröhrchen 15 in der Darstellung der Figur 4 nach rechts aus den röhrchenförmigen Ansätzen 8' herausgezogen, woraufhin diese sich fest an die Außenseite der Glasfaserkabel-Leerrrohre 14 anlegen. In diesem Zustand dichtet die Dichtungstülle 1 den Innenraum des Erd-Leerrohres 13 vollkommen dicht ab, so daß Gas und Feuchtigkeit, sofern sich diese in dem Erd-Leerrohr 13 befinden - aus diesem nicht austreten und nicht von außen in das Erd-Leerrohr 13 eintreten können.

Wenn durch das Erd-Leerrohr 13 zu einem späteren Zeitpunkt zusätzliche Glasfaserkabel-Leerrohre (mit und ohne eingezogene Glasfaserkabel) geführt werden sollen, werden hierfür zusätzliche röhrchenförmige Ansätze 8 in Anspruch genommen.

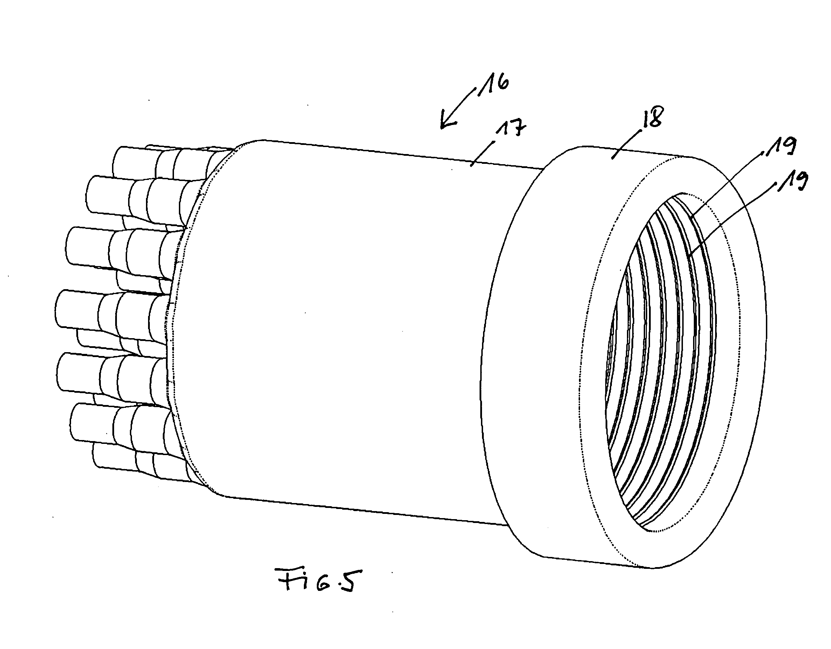

Figur 5 zeigt eine zweite Ausführungsform der Dichtungstülle 16, bei der der Basiskörper von der Lochwand bis zum rückwärtigen Ende eine durchgehende Kreiszylinderform hat. Am Ende des Basiskörpers 17 ist ein umgebördelter Stülprand 18 angeformt, der den Basiskörper 17 mit einem kleinen radialen Zwischenraum umgibt, so daß ein Monteur den Stülprand 18 mit Fingern beider Hände untergreifen und radial zusammen mit dem Endabschnitt des Basiskörpers 17 aufweiten kann, so daß die Dichtungstülle 16 leicht auf ein Erd-Leerrohr aufschiebbar ist. An der Innenfläche des Basiskörpers 17 sind mehrere voneinander beabstandete, radial nach innen vorstehende Dichtungsringe 19 angeformt, die sich fest an die Außenseite eines abzudichtenden Erd-Leerrohres oder an einen auf das Erd-Leerrohr aufgebrachten Adapterring legen. Somit kann die Dichtungstülle entweder direkt auf das Erd-Leerrohr aufgebracht werden, oder mittels eines Adapterringes auch Erd-Leerohre mit kleinerem Durchmesser als die des Basiskörpers abdichten.

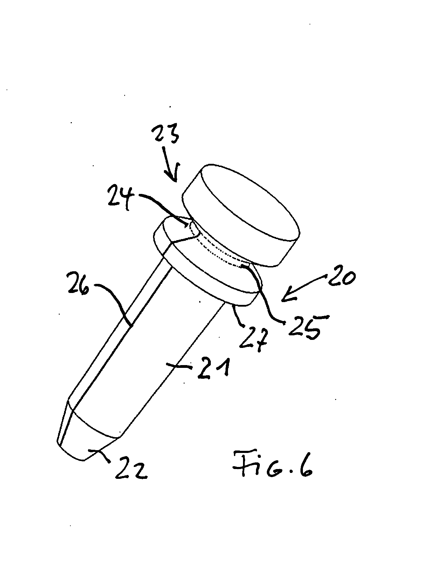

Wenn ein Glasfaserkabel-Leerrohr auf die beschriebene Weise auf die Dichtungstülle hindurchgeführt ist, wird sein Ende durch einen Stopfen 20 verschlossen, der in Figur 6 dargestellt ist. Der Stopfen hat einen Schaft 21, der ein vorderes konisch sich verjüngendes Ende 22 und einen Kopfabschnitt 23 hat, der durch eine umlaufende Ringnut 24 in zwei Teile geteilt ist. Der Schaft 21 ist hohl ausgebildet, wobei seine axiale Bohrung bis über den Nutboden 25 hinaus verläuft. Außerdem ist der Schaft 21 von der Spitze bis zum Nutboden 25 aufgeschnitten, wie durch die Trennlinie 26 in Figur 6 angedeutet ist.

Wenn ein Glasfaserkabel-Leerrohr noch nicht mit einem Glasfaserkabelstrang bestückt ist, wird der Stopfen in dem in Figur 6 dargestellten Zustand in das Ende des Glasfaserkabel-Leerrohres hineingedrückt, so daß sich die in der Figur untere Stirnfläche 27 des Kopfabschnitts 23 fest an den Rand des Glasfaserkabel-Leerrohres anlegt. Damit ist die Öffnung des Glasfaserkabel-Leerrohres dicht verschlossen.

Wenn durch das Glasfaserkabel-Leerrohr ein oder mehrere Glasfaserkabel gelegt werden, welche aus der Öffnung des Lehrrohres austreten, wird der vordere Teil des Kopfabschnitts 23 am Nutboden 25 abgetrennt, wodurch eine durchgehende Bohrung durch den (hohlen) Reststopfen verläuft. Dieser Reststopfen kann dann aufgeklappt und um die Glasfaserkabel gelegt werden, woraufhin er in das Ende des Glasfaserkabel-Leerrohres hineingepreßt wird. Damit ist der Zwischenraum zwischen den Glasfaserkabeln und der Rohrwand abgedichtet.

## Patentansprüche

1. Dichtungsvorrichtung für ein Rohr größeren Durchmessers, aus dem mehrere Rohre kleineren Durchmessers austreten können,
**gekennzeichnet durch**
eine Dichtungstülle (1, 16), die einen Basiskörper (2, 17) größeren Durchmessers mit einem offenen Ende und einem mit einer Lochwand (6) versehenen anderen Ende aufweist, wobei von den Rändern der Löcher (7) der Lochwand (6) röhrchenförmige Ansätze (8) kleineren Durchmessers mit in einem Ausgangszustand geschlossener vorderer Stirnwand (9) vorstehen und wobei die Dichtungstülle (1,16) aus einem gummielastischen Material besteht.

2. Dichtungsvorrichtung nach Anspruch 1,
**dadurch gekennzeichnet,**
**daß** der Basiskörper (17) eine Kreiszylinderform hat.

3. Dichtungsvorrichtung nach Anspruch 1 oder 2,
**dadurch gekennzeichnet,**
**daß** am offenen Ende des Basiskörpers (17) ein umgebördelter Stülprand (18) angeformt ist, der einen größeren Durchmesser als der Basiskörper (17) hat.

4. Dichtungsvorrichtung nach Anspruch 1,
**dadurch gekennzeichnet,**
**daß** der offene Endabschnitt (3) des Basiskörpers (2) einen kleineren Durchmesser als der anschließende Abschnitt (5) hat.

5. Dichtungsvorrichtung nach einem der Ansprüche 1 bis 4,
**dadurch gekennzeichnet,**
**daß** sich die röhrchenförmigen Ansätze (8) im wesentlichen in axialer Richtung der Dichtungstülle (1, 16) erstrecken.

6. Dichtungsvorrichtung nach einem der Ansprüche 1 bis 5,
**dadurch gekennzeichnet,**
**daß** die röhrchenförmigen Ansätze (8) auf konzentrischen Kreisen angeordnet sind.

7. Dichtungsvorrichtung nach einem der Ansprüche 1 bis 6,
**dadurch gekennzeichnet,**
**daß** sich der Durchmesser der röhrchenförmigen Ansätze (8) kontinuierlich oder stufenförmig zum Ende hin verringert.

8. Dichtungsvorrichtung nach einem der Ansprüche 1 bis 7,
**dadurch gekennzeichnet,**
**daß** die Dichtungstülle (1, 16) aus Silikon besteht.

9. Dichtungsvorrichtung nach Anspruch 1,
**dadurch gekennzeichnet,**
**daß** das Rohr größeren Durchmessers ein Erd-Leerrohr (13) ist und daß die Rohre kleineren Durchmessers Glasfaserkabel-Leerrohre (14) sind.

10. Dichtungsvorrichtung nach Anspruch 9,
**dadurch gekennzeichnet,**
**daß** die Enden der Glasfaserkabel-Leerrohre (14) durch Stopfen (20) aus einem gummielastischen Material verschließbar sind, die einen geschlitzten hohlen Schaft (21,22) und einen geschlossenen Kopfabschnitt haben.

11. Dichtungsvorrichtung nach einem der Ansprüche 1 bis 10,
ferner **gekennzeichnet durch**
Montageröhrchen (15), die nach Abtrennen der vorderen Stirnwände (9) von ausgewählten röhrchenförmigen Ansätzen (8) **durch** diese hindurch führbar sind.
